# EUROPÄISCHE PATENTSCHRIFT

(11) **EP 0 658 034 B1**
(45) Veröffentlichungstag und Bekanntmachung des Hinweises auf die Patenterteilung: **04.02.1998**
(21) Anmeldenummer: 94117556.4
(22) Anmeldetag: 07.11.1994
(51) Int. Cl.: H04M 3/54, H04Q 11/04

(54) **Schaltungsanordnung zur Anrufweiterleitung**
Circuit for call-forwarding
Circuit pour détourner des appels

(30) Priorität: 08.12.1993 DE 9318746 U
(43) Veröffentlichungstag der Anmeldung: 14.06.1995
(73) Patentinhaber: Wasenitz, Marion, D-65193 Wiesbaden (DE)
(72) Erfinder: Wasenitz, Marion, D-65193 Wiesbaden (DE)
(74) Vertreter: Frohwitter, Bernhard, Dipl.-Ing.

(56) Entgegenhaltungen:
- WO-A-89/06077
- DE-U- 9 318 746
- US-A- 4 475 009
- US-A- 4 670 900
- US-A- 4 768 221
- US-A- 4 807 279
- IEEE TRANSACTIONS ON CONSUMER ELECTRONICS, Bd. 36, Nr. 3, August 1990, NEW YORK US, Seiten 753-757, XP000162916 TASUHIRO NAGANAWA ET AL: "A STUDY OF AUDIO COMMUNICATION DEVICES FOR ISDN"
- PATENT ABSTRACTS OF JAPAN vol. 17, no. 421 (E-1409), 5.August 1993 & JP-A-05 083399

## Beschreibung

Die Erfindung betrifft eine Schaltungsanordnung zur Anrufweiterleitung in Vermittlungsanlagen mit programmgesteuerten Vermittlungsstellen, die programmierbar eine von einem Teilnehmer gesteuerte Anrufweiterschaltung ermöglichen.

Für Fernsprechteilnehmer, die an programmgesteuerte Vermittlungsstellen angeschlossen sind, besteht die Möglichkeit, in der Vermittlungsstelle programmgesteuert eine vom Teilnehmer gewünschte Anrufweiterschaltung zu ermöglichen. Gleiches gilt für ISDN-Vermittlungsstellen. Der Teilnehmer kann in beiden Fällen zur Verwirklichung des Merkmals "Anrufweiterleitung" nach Wahl eines vereinbarten Code die jeweilige Rufnummer eingeben, zu der eintreffende Anrufe weitergeleitet werden sollen. Das ist sowohl im geschäftlichen Bereich vorteilhaft, beispielsweise wenn ein Geschäftsmann auch auf einer ausgedehnten Reise immer erreichbar bleiben will, sondern auch im privaten Bereich, beispielsweise um zu vermeiden, daß man wegen eines erwarteten Anrufs nicht das Haus verlassen kann.

Häufig tritt jedoch der Wunsch nach einer Anrufweiterleitung dann auf, wenn sich der Teilnehmer nicht an seinem eigenen Anschluß befindet.

Schaltungsanordnungen, die eine Anrufweiterleitung von einem entfernten Anschluß ermöglichen, sind im Stand der Technik bekannt. Die Druckschrift WO-A-89 06 077 betrifft eine solche Schaltungsanordnung zur Anrufweiterleitung. Sie geht von dem Stand der Technik aus, bei dem zur Durchführung einer Anrufweiterleitung von einem entfernten Anschluß nicht eine Anschlußleitung, sondern zwei Anschlußleitungen benötigt werden. Die Erfindung gemäß dieser Druckschrift liegt darin, daß die Schaltungsanordnung zur Anrufweiterleitung in einem ersten Schritt Codesignale von einem entfernten Anschluß empfängt, diese Codesignale überprüft, und aus dieser Überprüfung ermittelt, welcher Steuerbefehl durchgeführt werden soll. In einem zweiten Schritt werden dann dem Steuerbefehl entsprechende Steuersignale an die Vermittlungsstelle übermittelt, und somit die Anrufweiterleitung eingeleitet, geändert oder terminiert. Eine Vielfalt von Szenarios, wie dieser erste Schritt implementiert werden kann, sind in der Beschreibung dieser Druckschrift aufgeführt. Hinsichtlich des zweiten Schritts besteht jedoch eine einheitliche Vorgehensweise bei alle Ausführungsbeispielen dieser Druckschrift nach Durchführung des ersten Schrittes wird die Verbindung mit dem entfernten Anschluß terminiert, und eine neue Verbindung mit der Vermittlungsstelle aufgebaut, um die einem gewünschten Steuerbefehl entsprechenden Steuersignale an die Vermittlungsstelle zu übermitteln.

Die Druckschrift US-A-4 670 900 betrifft wiederum eine Schaltungsanordnung zur Anrufweiterleitung. Ähnlich wie bei der Druckschrift WO-A-8 906 077 wird hier in einem ersten Schritt von empfangenen Codesignalen ermittelt, welcher Steuerbefehl durchgeführt werden soll, und dann in einem zweiten Schritt dieser Steuerbefehl an die Vermittlungsstelle übermittelt. Wiederum wird nach Ermittlung des Steuerbefehls, die Verbindung mit dem entfernten Anschluß terminiert, und eine neue Verbindung mit der Vermittlungsstelle aufgebaut, um an diese die entsprechenden Steuersignale zu übermitteln (vgl. Abstract "upon the detection of one or more short rings, the device seizes the phone line, transmits a "73" signal that cancels call forwarding"). Die US-A-4 670 900 unterscheidet sich von der WO-A-89 06077 lediglich in der Beschaffenheit und Auswertung der übermittelten Codesignale.

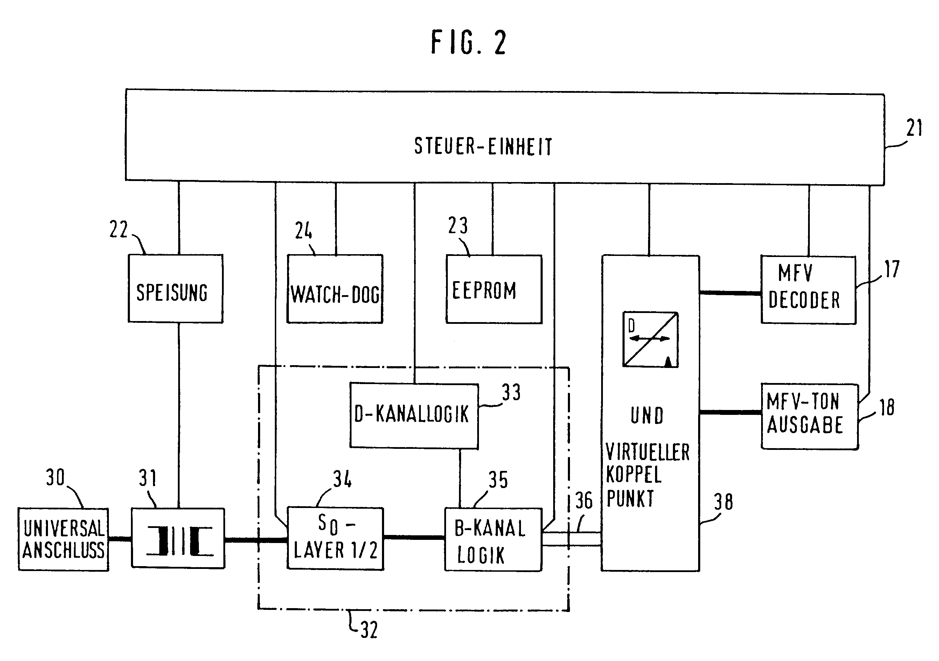

Die Druckschrift US-A-4 475 009 betrifft wiederum eine Schaltungsanordnung zur Anrufweiterleitung, bei der in einem ersten Schritt ermittelt wird, welcher Befehl an die Vermittlungsstelle weitergeleitet werden soll, und bei der dann in einem zweiten Schritt dieser Steuerbefehl anhand von Steuersignalen an die Vermittlungsstelle übermittelt wird. Wiederum ist es bei dieser Schaltungsanordnung erforderlich, daß die Verbindung mit dem entfernten Anschluß unterbrochen wird, um dann mittels einer aufgebauten Verbindung mit der Vermittlungsstelle den Steuerbefehl auszuführen (vgl. insbesondere Figur 2, Schritt 208 "detect dial tone, dial AT&T call forward sequence, set call forwarding = ON").

Aus der Veröffentlichung "A Study of Audiocommunication Devices for ISDN, Naganawa et al. in IEEE, Transactions on Consumer Electronics, 36 (1990) August, No. 3" ist ein ISDN-Endgerät bekannt, bei dem die Anrufweiterleitung direkt im Endgerät verwirklicht wird, wobei zur Anrufweiterleitung zwei B-Kanäle der ISDN-Anschlußleitung verwendet werden. Über den einen B-Kanal wird der einkommende Anruf empfangen und dann über den anderen B-Kanal an die Vermittlungsstelle zur Anrufweiterleitung zurückgesandt. Eine Anrufweiterleitung von einem entfernten Anschluß ist aus dieser Veröffentlichung jedoch nicht bekannt.

Der Erfindung liegt demgemäß die Aufgabe zugrunde, eine Anrufweiterleitung in Fernsprechanlagen auch von einem entfernten, beliebigen Anschluß aus einleiten zu können. Die Lösung der Aufgabe ist im Anspruch 1 gekennzeichnet.

Mit Hilfe der Anrufweiterleitungs-Steuerschaltung kann daher in beliebiger Weise von fern und von jedem beliebigen Anschluß des Gesamtnetzes aus die jeweils gewünschte Anrufweiterleitung eingestellt werden. Da dabei das in der programmgesteuerten Vermittlungsstelle selbst vorgegebene Leistungsmerkmal benutzt wird, sind keinerlei Maßnahmen beim Teilnehmer selbst erforderlich, die der Entdämpfung bzw. der Verstärkung weitergeschalteter Verbindungen dienen.

Die Schaltungsanordnung nach der Erfindung läßt sich in digitalen ISDN-Vermittlungsstellen verwirklichen. In analogen Systemen des Standes der Technik werden die Codesignale über eine analoge Teilnehmeranschlußleitung zur Anrufweiterleitungs-Steuerschaltung übertragen und die Steuersignale dann ebenfalls über eine analoge Anschlußleitung zum Vermittlungsamt gegeben. Gemäß der vorliegenden Erfindung kommen die Codesignale über einen B-Kanal eines ISDN-Anschlusses bei der Anrufweiterleitungs-Steuerschaltung an, wobei für diesen B-Kanal keine Anrufweiterleitung vorgesehen ist. Die Einstellung des Leistungsmerkmals "Anrufweiterleitung" erfolgt dann über den D-Kanal. Wenn es sich bei dem ISDN-Anschluß um einen Universalanschluß mit wenigstens einer Mehrfachrufnummer (MSN = Multiple Subscriber Number) handelt, kann die Schaltungsanordnung nach der Erfindung einer oder mehrerer dieser Mehrfachrufnummern zugeordnet sein.

So kann vorgesehen sein, daß zur Übertragung der Codesignale zur Anrufweiterleitungs-Steuerschaltung eine von wenigstens zwei Teilnehmeranschlußleitungen oder ein von wenigstens zwei ISDN-Kanälen und zur Übertragung der Steuersignale zur zugeordneten Vermittlungsstelle die andere Teilnehmeranschlußleitung oder der andere ISDN-Kanal sowie der ISDN-Steuerkanal (D-Kanal) vorgesehen sind. In diesem Fall können die Steuersignale schon zur Vermittlungsstelle übertragen werden, während die Verbindung zur Übertragung der Codesignale von der entfernten Teilnehmerstelle noch besteht. In Weiterbildung der Erfindung weist die Anrufweiterleitungs-Steuerschaltung einen Speicher auf, der die übertragenen Codesignale aufnimmt.

Eine Sicherung dagegen, daß eine unberechtigte Anrufweiterleitung eingestellt wird, kann dadurch erreicht werden, daß die Anrufweiterleitungs-Steuerschaltung eine Schaltung zur Erkennung eines Paßwortes enthält, das zusammen mit dem Codesignal von dem entfernten Teilnehmeranschluß übertragen wird. Nur bei richtigem Paßwort tritt dann die Anrufweiterleitungs-Steuerschaltung in Tätigkeit. Außerdem kann in der Anrufweiterleitungs-Steuerschaltung ein Zeitgeber vorgesehen sein, der durch Signale programmiert ist, die zusammen mit den Codesignalen vom entfernten Teilnehmeranschluß übertragen werden. Die Einstellung oder Umstellung der Anrufweiterleitung kann dann zeitlich gesteuert werden, beispielsweise erst nach einer bestimmten Zeit bzw. nur für eine bestimmte Zeit wirksam werden.

Nach einem weiteren Merkmal kann die Anrufweiterleitungs-Steuerschaltung eine Schaltung enthalten, die unter Ansprechen auf Abfragesignale vom entfernten Teilnehmeranschluß die jeweilige Einstellung der Anrufweiterleitung zum entfernten Teilnehmeranschluß zurückgibt. Es kann also jeweils festgestellt werden, ob die Einstellung richtig ist. Auch hier ist wiederum eine Sicherung durch einen besonderen Code oder ein Paßwort möglich.

Die Anrufweiterleitungs-Steuerschaltung kann jeweils in eine Teilnehmereinrichtung, beispielsweise einen Telefonapparat oder einen Anrufbeantworter integriert sein. Eine andere Möglichkeit besteht darin, daß die Anrufweiterleitungs-Steuerschaltung in Form eines getrennten Gerätes verwirklicht ist, das am Teilnehmeranschluß an den ISDN-Anschluß anschaltbar ist.

Nachfolgend wird die Erfindung anhand der Zeichnungen beschrieben. Es zeigen:
- Fig. 1: das Blockschaltbild einer Anrufweiterleitungs-Steuerschaltung zur Anschaltung an zwei analoge Anschlußleitungen gemäß dem Stand der Technik
- Fig. 2: eine Anrufweiterleitungs-Steuerschaltung nach der Erfindung zur Anschaltung an einen ISDN-Basisanschluß,
- Fig. 3: eine Anrufweiterleitungs-Steuerschaltung nach dem Stand der Technik unter Verwendung nur einer analogen Anschlußleitung.

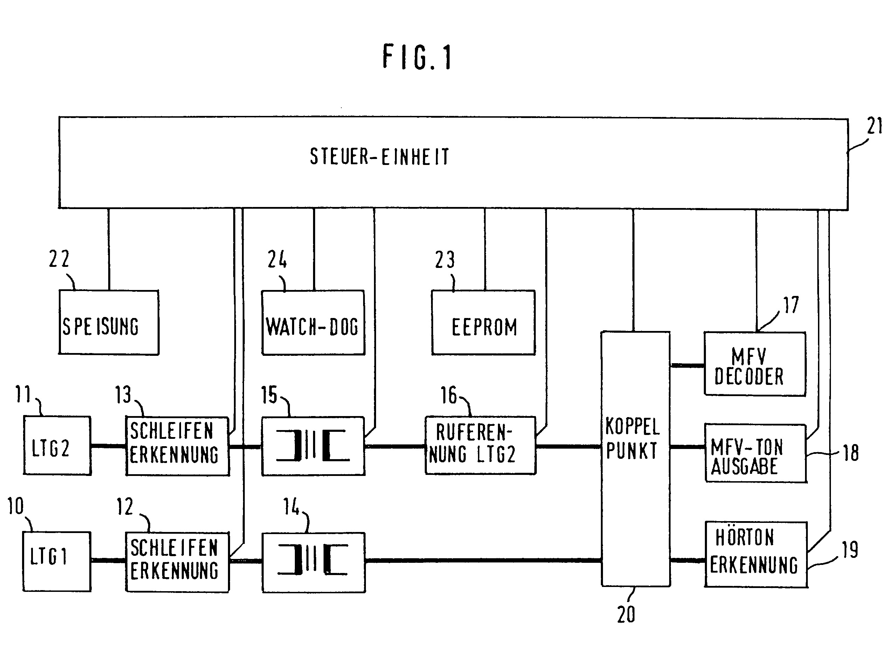

Die Anrufweiterleitungs-Steuerschaltung gemäß Fig. 1 ist an zwei analoge Anschlußleitungen 10, 11 einer programmgesteuerten Vermittlungsstelle (ANIS-Vermittlungsstelle) - die hier nicht dargestellt ist - angeschlossen. Wenn die Anrufweiterleitungs-Steuerschaltung als getrenntes Gerät ausgeführt ist, kann die Anschaltung beispielsweise über normale N-codierte TAE-Stecker (nicht dargestellt) erfolgen. Schleifenerkennungsschaltungen 12, 13 ermöglichen die Feststellung des Schleifenzustandes in üblicher Weise. Zur Potentialtrennung folgen dann jeweils Übertrager 14, 15 ebenfalls üblicher Art. Für die zweite Anschlußleitung 11 ist eine Ruferkennungsschaltung 16 vorgesehen, die für die Erkennung der gegebenenfalls übertragenen Codesignale zur Einstellung des Leistungsmerkmals "Anrufweiterleitung" erforderlich sind. Die Erkennungsschaltung 16 ist zusammen mit einer Mehrfrequenz-Decodierschaltung 17 sowie einer Mehrfrequenz-Tonausgabeschaltung 18 und einer Hörton-Erkennungsschaltung 19, die alle üblicher Bauart sind, an einen Koppler oder Koppelpunkt 20 angeschlossen, der die Herstellung von Verbindungen zwischen den letztgenannten Schaltungen ermöglicht.

Die Gesamtsteuerung erfolgt durch eine Steuereinheit 21, die einen Mikroprozessor und zugeordnete Bauteile bekannter Art enthält. Hiervon sind nur die Speiseschaltung 22, ein EEPROM-Speicher 23 und eine Überwachungsschaltung in Form eines sogenannten "Watch-Dog" dargestellt. Auch diese Bauteile sind bekannt.

Zur Ferneinstellung des Leistungsmerksmals "Anrufweiterleitung" von einem beliebigen, entfernten Anschluß aus wird eine Verbindung über die Anschlußleitung 11 (LTG2) zur Anrufweiterleitungs-Steuerschaltung gemäß Fig. 1 hergestellt. Über die Schleifenerkennungsschaltung 13 und die Ruferkennungsschaltung 16 stellt dann die Steuereinheit 21 gegebenenfalls zunächst die Berechtigung und anschließend die übertragenen Codesignale zur Einstellung einer Anrufweiterleitung fest. Wenn die ankommenden Codesignale Mehrfrequenz-Signale sind, erfolgt eine Decodierung über die Schaltung 17. Die Steuereinheit 21 leitet daraufhin eine Verbindung über die Anschlußleitung 10 (LTG1) zur Vermittlungsstelle (nicht dargestellt) ein. Über diese Verbindung werden dann die zur Einstellung der Anrufweiterleitung erforderlichen Steuersignale in Form von Mehrfrequenz-Tonsignalen mittels der Schaltung 18 zur Vermittlungsstelle übertragen. Diese stellt dann die Anrufweiterleitung auf die gleiche Weise her, wie sie bei direkter Übertragung der Steuersignale vom Teilnehmeranschluß eingeleitet wird.

Fig. 2 zeigt ein Ausführungsbeispiel der Erfindung, bei der die Anrufweiterleitungs-Steuerschaltung mit einem ISDN-Anschluß verbunden ist. Soweit die Bauteile mit der Anrufweiterleitungs-Steuerschaltung gemäß Fig. 1 übereinstimmen, werden gleiche Bezugszeichen verwendet. Zur Erläuterung dieser Bezugszeichen wird auf die Beschreibung der Fig. 1 verwiesen. Die Anrufweiterleitungs-Steuerschaltung wird an einem sogenannten ISDN-Universalanschluß 30 üblicher Art betrieben. Es folgt ein Ubertrager 31 und eine gestrichelt umrahmte S₀-Anschlußeinheit 32, die in bekannter Weise eine D-Kanallogik 33, eine S₀-Layer 1/2 34 und eine B-Kanallogik 35 enthält. Am Ausgang der B-Kanallogik 35 steht ein B-Kanal 36 zur Verfügung, der zu einem Schaltungsblock 38 mit einem Digital-Analog- bzw. Analog-Digital-Wandler und einen virtuellen Koppelpunkt enthält. An den Schaltungsblock 38 sind wiederum ein Mehrfrequenz-Decoder 17 und eine Mehrfrequenz-Tonausgabeschaltung 18 angeschlossen.

Ein ankommender Anruf mit Übertragung von Codesignalen zur Einstellung des Leistungsmerkmals "Anrufweiterleitung" wird von der Steuereinheit 21 erkannt, die alle angeschlossenen Bauteile überwacht. Die Steuereinheit gibt daraufhin die erforderlichen Steuersignale zur Einstellung der Anrufweiterleitung den Steuerkanal (D-Kanal) zur ISDN-Vermittlungsstelle (nicht dargestellt).

Es kann eine Sicherung durch Paßwörter erfolgen. Die Anrufweiterleitung wird bei dieser Anordnung nach Ablauf eines programmierbaren Timers jeweils deaktiviert, damit der Anschluß bzw. die Einrichtung wieder für eine neue Programmierung verfügbar ist.

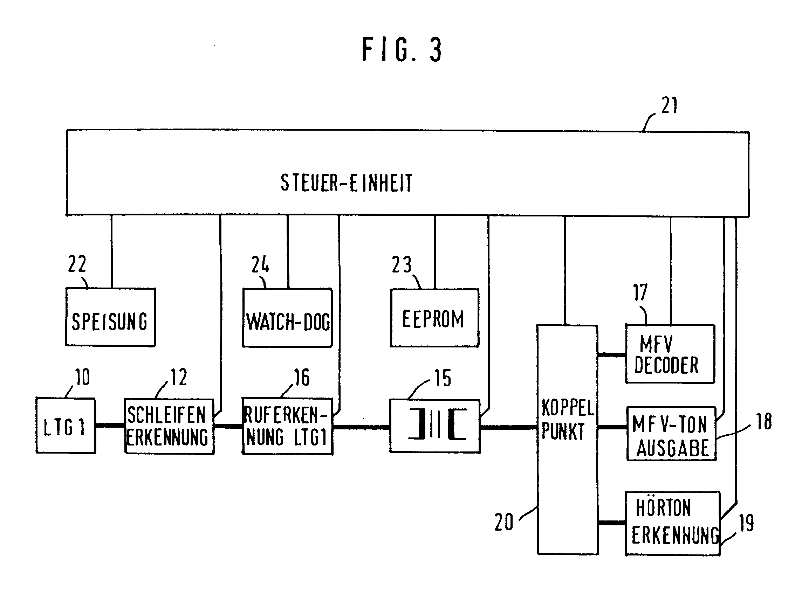

Die Anrufweiterleitungs-Steuerschaltung gemäß Fig. 3 entspricht wiederum im wesentlichen Teilen der Schaltungsanordnung nach Fig. 1, und entsprechende Bauteile sind mit gleichen Bezugsziffern versehen. Im Gegensatz zur Schaltungsanordnung nach Fig. 1 ist jedoch nur eine Anschlußleitung 10 vorhanden, die bezüglich der Ruferkennungsschaltung 16 der Anschlußleitung 11 in Fig. 1 entspricht. Die Steuereinheit 21 erkennt wiederum mit Hilfe der Ruferkennungsschaltung 16 sowie der Decoderschaltung 17 bei einem ankommenden Anruf einen Code, der die Einstellung des Leistungsmerkmals "Anrufweiterschaltung" verlangt. Die zugehörigen Codesignale werden von der Steuereinheit 21 gespeichert. Nach Beendigung der Verbindung über die Anschlußleitung 10 mit der entfernten Teilnehmerstelle können dann die von der Steuereinheit aus den Codesignalen abgeleiteten Steuersignale über die gleiche Anschlußleitung 10 zur Vermittlungsstelle (nicht dargestellt) gegeben werden.

## Patentansprüche

1. Schaltungsanordnung zur Anrufweiterleitung in Vermittlungsanlagen mit programmgesteuerten Vermittlungsstellen, die programmierbar eine von einem Teilnehmer gesteuerte Anrufweiterleitung ermöglichen,
dadurch gekennzeichnet, daß
die Schaltungsanordnung aufweist
Mittel (30) zum Verbinden der Schaltungsanordnung mit einer ISDN-Anschlußleitung, die wenigstens zwei ISDN-Kanäle aufweist, und
Mittel (21, 32) zum Auswerten von über einen ersten ISDN-Kanal empfangenen Codesignalen, zum Erzeugen von Steuersignalen auf der Grundlage der Auswertung der über die Anschlußleitung empfangenen Codesignale und zum Übermitteln der Steuersignale an die Vermittlungsstelle über einen zweiten ISDN-Kanal unter Aufrechterhaltung des ersten ISDN-Kanals.

2. Schaltungsanordnung nach Anspruch 1, dadurch gekennzeichnet, daß die Schaltungsanordnung eine Steuereinheit (21) aufweist.

3. Schaltungsanordnung nach einem der Ansprüche 1 oder 2, dadurch gekennzeichnet, daß die Schaltungsanordnung eine S₀-Anschlußeinheit (32) aufweist.

4. Schaltungsanordnung nach einem der Ansprüche 1-3, dadurch gekennzeichnet, daß die Schaltungsanordnung einen Speicher (23) zur Speicherung der empfangenen Codesignale aufweist.

5. Schaltungsanordnung nach einem der Ansprüche 1-4, dadurch gekennzeichnet, daß die Schaltungsanordnung einen Digital-Analog- bzw. Analog-Digital Wandler und einen virtuellen Koppelpunkt (38) aufweist.

6. Schaltungsanordnung nach einem der Ansprüche 1-5, dadurch gekennzeichnet, daß die Schaltungsanordnung einen MFV-Decoder (17) und eine MFV-Ton Ausgabeeinrichtung (18) aufweist.

7. Schaltungsanordnung nach einem der Ansprüche 1-6, dadurch gekennzeichnet, daß die Schaltungsanordnung Mittel zur Erkennung eines zusammen mit den Codesignalen von dem entfernten Teilnehmer übertragenen Paßwortes aufweist.

8. Schaltungsanordnung nach einem der Ansprüche 1-7, dadurch gekennzeichnet, daß die Schaltungsanordnung einen Zeitgeber aufweist, der durch zusammen mit den Codesignalen von dem entfernten Teilnehmer übertragenen Signalen derart programmierbar ist, daß die Einstellung oder eine Umstellung der Anrufweiterleitung mittels der Steuersignale zeitlich steuerbar ist.

9. Schaltungsanordnung nach einem der Ansprüche 1-8, dadurch gekennzeichnet, daß die Schaltungsanordnung Mittel zur Zurückgabe der Einstellungen der Anrufweiterleitung an den entfernten Teilnehmer in Antwort auf von dem entfernten Teilnehmer übertragenen Abfragesignalen aufweist.

10. Schaltungsanordnung nach einem der Ansprüche 1-9, dadurch gekennzeichnet, daß die Schaltungsanordnung in Form eines getrennten Gerätes an die Anschlußleitung anschaltbar ist.

## Claims

1. Circuit configuration for call forwarding in telephone exchange installations with program controlled switching units which are programmed to enable the call forwarding process to be controlled by a subscriber,
characterized in that
the circuit configuration comprises
means (30) for connecting the circuit configuration to an ISDN branch line that comprises a minimum of two ISDN channels, and
means (21, 32) for evaluating code signals received via one first ISDN channel, for generating control signals on the basis of the evaluation of the code signals received via branch line, and for transmitting the control signals to the switching unit via a second ISDN channel, while maintaining the first ISDN channel.

2. Circuit configuration according to Claim 1,
characterized in that
the circuit configuration comprises a control unit (21).

3. Circuit configuration according to one of the Claims 1 or 2,
characterized in that
the circuit configuration comprises a S₀ connection unit (32).

4. Circuit configuration according to one of the Claims 1 - 3,
characterized in that
the circuit configuration comprises a memory (23) for storing the code signals received.

5. Circuit configuration according to one of the Claims 1 - 4,
characterized in that
the circuit configuration comprises a digital/analog converter or an analog/digital converter respectively and a virtual switching element (38).

6. Circuit configuration according to one of the Claims 1 - 5,
characterized in that
the circuit configuration comprises a DTMF decoder (17) and a DTMF tone output unit (18).

7. Circuit configuration according to one of the Claims 1 - 6,
characterized in that
the circuit configuration comprises means for recognizing a password transmitted by the remote subscriber, which is transmitted together with the code signals.

8. Circuit configuration according to one of the Claims 1 - 7,
characterized in that
the circuit configuration comprises a timer which is by means of signals transmitted together with the code signals transmitted by the remote subscriber programmed in such a way that the setting or changing of the call forwarding can be controlled in terms of time by means of the control signals.

9. Circuit configuration according to one of the Claims 1 - 8,
characterized in that
the circuit configuration comprises means for transmitting the settings of the call forwarding to the remote subscriber in response to request signals transmitted by the remote subscriber.

10. Circuit configuration according to one of the Claims 1 - 9,
characterized in that
the circuit configuration is attachable to the branch line by means of a connection in the form of a separate device.

## Revendications

1. Structure de circuit pour la transmission d'appels dans des installations de communication automatique comprenant des postes de communication contrôlés par logiciel et permettant d'une façon programmable une transmission d'appel contrôlée par une des personnes en ligne,
caractérisé en ce que
la structure de circuit comprend
des moyens (30) de connexion de la structure de circuit à une ligne de connexion RNIS comprenant au moins deux canaux RNIS, et
des moyens (21, 32) pour évaluer des signaux codés reçus par l'intermédiaire d'un premier canal RNIS afin de générer des signaux de contrôle sur la base de l'évaluation des signaux codés reçus par la ligne de connexion et de transmettre les signaux de contrôle au poste de communication par l'intermédiaire d'un deuxième canal RNIS en maintenant le premier canal RNIS.

2. Structure de circuit selon la revendication 1, caractérisée en ce que la structure de circuit comprend une unité de contrôle (21).

3. Structure de circuit selon l'une des revendications 1 ou 2, caractérisée en ce que la structure de circuit comprend une unité de connexion S₀ (32).

4. Structure de circuit selon l'une des revendications 1 à 3, caractérisée en ce que la structure de circuit comprend une mémoire (23) pour mémoriser les signaux codés reçus.

5. Structure de circuit selon l'une des revendications 1 à 4, caractérisée en ce que la structure de circuit comprend un convertisseur numérique-analogique et/ou analogique-numérique et un point de couplage virtuel (38).

6. Structure de circuit selon l'une des revendications 1 à 5, caractérisée en ce que la structure de circuit comprend un décodeur MFV (17) et un dispositif de sortie de son MFV (18).

7. Structure de circuit selon l'une des revendications 1 à 6, caractérisée en ce que la structure de circuit comprend des moyens de reconnaissance d'un mot de passe transmis ensemble avec les signaux codés du participant éloigné.

8. Structure de circuit selon l'une des revendications 1 à 7, caractérisée en ce que la structure de circuit comprend un générateur d'horloge programmable par l'intermédiaire des signaux transmis ensembles avec les signaux codés du participant éloigné d'une façon telle que le réglage ou une modification de la transmission d'appel peut être contrôlée dans le temps par l'intermédiaire des signaux de contrôle.

9. Structure de circuit selon l'une des revendications 1 à 8, caractérisée en ce que la structure de circuit comprend des moyens pour renvoyer les réglages de la transmission d'appel vers le participant éloigné en réponse à des signaux d'interrogation transmis par le participant éloigné.

10. Structure de circuit selon l'une des revendications 1 à 9, caractérisée en ce que la structure de circuit peut être connectée à la ligne de connexion sous forme d'un dispositif séparé.
